# EUROPEAN PATENT APPLICATION

(11) **EP 4 708 543 A1**
(43) Date of publication of application: **11.03.2026**
(21) Application number: 23939365.5
(22) Date of filing: 18.12.2023
(51) Int. Cl.: H01M 50/50, H01M 50/209, H01M 10/653

(54) **BATTERY AND ELECTRIC DEVICE**

(30) Priority: 31.05.2023 CN 202310640621
(71) Applicant: Contemporary Amperex Technology Co., Limited, Ningde, Fujian 352100 (CN)
(72) Inventor: LIU, Shaozhong, Ningde, Fujian 352100 (CN); LI, Yuanxin, Ningde, Fujian 352100 (CN); ZHENG, Chenling, Ningde, Fujian 352100 (CN); WANG, Yu, Ningde, Fujian 352100 (CN); KANG, Hairong, Ningde, Fujian 352100 (CN)
(74) Representative: Gong, Jinping
(86) International application number: PCT/CN2023/139591
(87) International publication number: WO 2024/244397

(57) **Abstract**

The present application relates to the field of batteries, and provides a battery (1) and an electrical apparatus. The battery (1) includes a thermal management component (40) and an electrical box (30). The electrical box (30) includes a case (31) and a thermally conductive structure (32). The case (31) is configured to accommodate a heat-generating component (33). The thermally conductive structure (32) is sealingly connected to the case (31), and the thermally conductive structure (32) connects the heat-generating component (33) and the thermal management component (40). The electrical box (30) of the battery (1) facilitates heat exchange between the heat-generating component (33) and the thermal management component (40) via the thermally conductive structure (32) to meet the heat dissipation requirements of the electrical box (30). Additionally, by sealingly connecting the thermally conductive structure (32) to the case (31), connection gaps are sealed to prevent liquid infiltration into the interior of the case (31), thereby enhancing the sealing performance of the electrical box (30) and reducing the risk of high-voltage short-circuit arcing in the electrical box (30) due to water infiltration.

## Description

### CROSS-REFERENCE TO RELATED APPLICATIONS

The present application claims priority to Chinese Patent Application No. 202310640621.5, filed with the China National Intellectual Property Administration on May 31, 2023, entitled "BATTERY AND ELECTRICAL APPARATUS", the entire contents of which are incorporated herein by reference.

### TECHNICAL FIELD

The implementations of the present application relate to the field of battery technologies, and in particular, to a battery and an electrical apparatus.

### BACKGROUND

In a battery, an electrical box serves as a control unit for distributing energy of the battery and is configured to perform high-voltage distribution for the battery. In some scenarios, the electrical box may expose part of a heat-generating component outside the case to facilitate dissipation of heat from the heat-generating component to the exterior of the case. However, this may easily lead to a risk of high-voltage short-circuit arcing in the electrical box due to water infiltration from the exterior to the interior, which affects safety performance.

### SUMMARY

The embodiments of the present application provide a battery and an electrical apparatus, which are intended to solve the problem that an electrical box affects safety performance in order to meet heat dissipation requirements.

To achieve the aforementioned objective, the technical solutions adopted in the embodiments of the present application are as follows:
In a first aspect, a battery is provided, including:
a thermal management component configured to regulate a temperature of the battery; and
an electrical box including:
   a case configured to accommodate a heat-generating component; and
   a thermally conductive structure sealingly connected to the case, the thermally conductive structure connecting the heat-generating component and the thermal management component.

In the battery according to the embodiments of the present application, the electrical box can accommodate the heat-generating component through the case and connect the heat-generating component inside the case to the thermal management component outside the case through the thermally conductive structure, so as to facilitate heat exchange and thermal conduction between the heat-generating component and the thermal management component via the thermally conductive structure, and particularly to facilitate thermal conduction of heat generated by the heat-generating component to the thermal management component through the thermally conductive structure, thereby ensuring and improving the heat dissipation performance and heat dissipation efficiency of the electrical box, reducing the risk of overheating in the electrical box, ensuring the operational performance of the heat-generating component, and ensuring and extending the service life of the heat-generating component, the electrical box, and the battery. Furthermore, since the thermally conductive structure is sealingly connected to the case, the connection gap between the thermally conductive structure and the case can be effectively sealed, and thus liquid infiltration from the exterior of the case into the interior of the case through the gap between the thermally conductive structure and the case can be reliably prevented, thereby effectively ensuring and improving the sealing performance between the case and the electrical box, effectively reducing the risk of high-voltage short-circuit arcing in the electrical box due to water infiltration from the exterior to the interior, and effectively ensuring the safety performance of the electrical box and the battery.

In some embodiments, the thermally conductive structure is connected to the heat-generating component in an electrically insulative and thermally conductive manner.

By adopting the aforementioned solution, the heat-generating component is connected to the thermally conductive structure in an electrically insulative and thermally conductive manner, which, on the one hand, can facilitate rapid and reliable heat exchange between the thermally conductive structure and the heat-generating component, and particularly facilitate thermal conduction and dissipation of heat generated by the heat-generating component to the thermal management component through the thermally conductive structure, thereby ensuring and improving the heat dissipation performance and heat dissipation efficiency of the electrical box, and ensuring and improving the operational performance and service life of the heat-generating component thermally conductively connected to the thermally conductive structure. On the other hand, short circuits between the heat-generating component and the thermally conductive structure can be avoided, thereby reducing the risk of high-voltage short-circuit arcing in the electrical box and improving the safety performance of the electrical box and the battery.

In some embodiments, the thermally conductive structure is connected to the thermal management component in an electrically insulative and thermally conductive manner.

By adopting the aforementioned solution, the thermally conductive structure is connected to the thermal management component in an electrically insulative and thermally conductive manner, which, on the one hand, can facilitate rapid and reliable heat exchange between the thermally conductive structure and the thermal management component, and particularly facilitate thermal conduction and dissipation of heat generated by the heat-generating component to the thermal management component through the thermally conductive structure, thereby ensuring and improving the heat dissipation performance and heat dissipation efficiency of the electrical box, reducing the risk of overheating in the electrical box, and ensuring and extending the service life of the electrical box and the battery. On the other hand, short circuits between the thermally conductive structure and the thermal management component can be avoided, thereby reducing the risk of high-voltage short-circuit arcing in the electrical box and improving the safety performance of the electrical box and the battery.

In some embodiments, a heat dissipation hole penetrates through a side wall of the case; and the thermally conductive structure includes a heat dissipation member, the heat dissipation member being embedded in the heat dissipation hole, where a peripheral wall of the heat dissipation member is sealingly connected to a hole wall of the heat dissipation hole.

By adopting the aforementioned solution, the electrical box can embed the heat dissipation member in the heat dissipation hole on the side wall of the case, so as to facilitate heat exchange between the interior and exterior of the case through the heat dissipation member, and particularly facilitate thermal conduction of heat from the heat-generating component to the thermal management component through the heat dissipation member, thereby ensuring the heat dissipation performance and heat dissipation efficiency of the electrical box, reducing the risk of overheating in the electrical box, and ensuring and extending the service life of the heat-generating component, the electrical box, and the battery. On this basis, the electrical box can also reliably sealingly connect the thermally conductive structure to the case by sealingly connect the peripheral wall of the heat dissipation member to the hole wall of the heat dissipation hole, so that the connection gap between the thermally conductive structure and the case can be effectively sealed, and particularly, the gap between the peripheral wall of the heat dissipation member and the hole wall of the heat dissipation hole can be effectively sealed, and thus liquid infiltration from the exterior of the case into the interior of the case through the gap between the peripheral wall of the heat dissipation member and the hole wall of the heat dissipation hole can be reliably prevented, thereby ensuring and improving the sealing performance between the case and the electrical box, reducing the risk of high-voltage short-circuit arcing in the electrical box due to water infiltration from the exterior to the interior, and improving the safety performance of the electrical box and the battery.

In some embodiments, the heat dissipation member and the case form an integrated structure.

By adopting the aforementioned solution, the heat dissipation member and the case can form an integrated structure through an integrated molding process. Based on this, on the one hand, the gap between the peripheral wall of the heat dissipation member and the hole wall of the heat dissipation hole can be conveniently, rapidly, and reliably sealed by integrally connecting the peripheral wall of the heat dissipation member and the hole wall of the heat dissipation hole, thereby ensuring and improving the sealing performance between the case and the electrical box, and reducing the risk of high-voltage short-circuit arcing in the electrical box due to water infiltration from the exterior to the interior. On the other hand, the structural strength between the heat dissipation member and the case can be enhanced, the assembly process between the heat dissipation member and the case can be reduced, and the production efficiency of the electrical box can be improved.

In some embodiments, the heat dissipation member and the case are integrally injection-molded.

By adopting the aforementioned solution, the heat dissipation member and the case can be integrally injection-molded. Based on this, on the one hand, the connection strength between the heat dissipation member and the case can be enhanced, the overall structural strength of the heat dissipation member and the case can be enhanced, the assembly process between the heat dissipation member and the case can be reduced, and the production efficiency of the electrical box can be improved. On the other hand, the connection between the peripheral wall of the heat dissipation member and the hole wall of the heat dissipation hole can be made tight, conforming, and reliable, so that the gap between the peripheral wall of the heat dissipation member and the hole wall of the heat dissipation hole can be conveniently, rapidly, and reliably sealed, thereby improving the sealing performance between the case and the electrical box, and reducing the risk of high-voltage short-circuit arcing in the electrical box due to water infiltration from the exterior to the interior.

In some embodiments, the hole wall of the heat dissipation hole is provided with a recess, and part of the heat dissipation member is embedded in the recess.

By adopting the aforementioned solution, on the basis that the heat dissipation member and the case form an integrated structure, by embedding part of the heat dissipation member in the recess on the hole wall of the heat dissipation hole, the area of connection between the heat dissipation member and the heat dissipation hole can be increased, the overall structural strength of the heat dissipation member and the case can be enhanced, and the strength, the tightness, and the conformity of the connection between the heat dissipation member and the case can be enhanced, thereby improving the sealing reliability between the heat dissipation member and the heat dissipation hole, improving the sealing performance between the case and the electrical box, and reducing the risk of high-voltage short-circuit arcing in the electrical box due to water infiltration from the exterior to the interior.

In some embodiments, the heat dissipation member is an aluminum plate, the aluminum plate being connected to the heat-generating component in an electrically insulative and thermally conductive manner, and the aluminum plate being connected to the thermal management component in an electrically insulative and thermally conductive manner.

By adopting the aforementioned solution, by configuring the heat dissipation member as an aluminum plate, the thermal conduction effects of the heat dissipation member and the thermally conductive structure can be effectively ensured and improved based on the excellent thermal conductivity of the aluminum plate, thereby effectively ensuring and improving the heat dissipation performance and heat dissipation efficiency of the electrical box, effectively reducing the risk of overheating in the electrical box, and ensuring and extending the service life of the heat-generating component, the electrical box, and the battery. On this basis, by connecting the aluminum plate to the heat-generating component in an electrically insulative and thermally conductive manner, short circuits between the aluminum plate and the heat-generating component can be avoided, and by connecting the aluminum plate to the thermal management component in an electrically insulative and thermally conductive manner, short circuits between the aluminum plate and the thermal management component can be avoided, thereby reducing the risk of high-voltage short-circuit arcing in the electrical box, and improving the safety performance of the electrical box and the battery.

In some embodiments, the thermally conductive structure includes a first thermally conductive pad, the first thermally conductive pad being disposed between the heat-generating component and the heat dissipation member.

By adopting the aforementioned solution, through thermally conductive connection of the first thermally conductive pad between the heat-generating component and the heat dissipation member, reliable heat exchange between the heat dissipation member and the heat-generating component is facilitated, and particularly thermal conduction of heat generated by the heat-generating component to the heat dissipation member through the first thermally conductive pad and then dissipation of the heat to the exterior of the case through the heat dissipation member is facilitated, thereby ensuring the heat dissipation performance and heat dissipation efficiency of the electrical box, and ensuring the operational performance and service life of the heat-generating component.

In some embodiments, the first thermally conductive pad is an elastic member.

By adopting the aforementioned solution, by configuring the first thermally conductive pad as an elastic member, the first thermally conductive pad disposed between the heat-generating component and the heat dissipation member has elastic performance, enabling it to adaptively undergo elastic deformation to conformally abut between the heat-generating component and the heat dissipation member. Based on this, close conformity between the first thermally conductive pad and the heat-generating component can be ensured and sufficient area of abutment can be formed, and close conformity between the first thermally conductive pad and the heat dissipation member can be ensured and sufficient area of abutment can be formed, thereby ensuring that the first thermally conductive pad can be reliably and effectively thermally conductively connected between the heat-generating component and the heat dissipation member, ensuring and improving the thermal conduction effect of the first thermally conductive pad, and ensuring and improving the heat dissipation performance and heat dissipation efficiency of the electrical box.

In some embodiments, the first thermally conductive pad is an insulating member.

By adopting the aforementioned solution, by configuring the first thermally conductive pad as an insulating member, the first thermally conductive pad disposed between the heat-generating component and the heat dissipation member possesses insulating properties, enabling insulative isolation between the heat-generating component and the heat dissipation member. Based on this, short circuits between the heat-generating component and the heat dissipation member can be avoided, thereby reducing the risk of high-voltage short-circuit arcing in the electrical box.

In some embodiments, a side of the heat dissipation member facing the heat-generating component is provided with a first thermally conductive layer.

By adopting the aforementioned solution, by providing the first thermally conductive layer on the side of the heat dissipation member facing the heat-generating component, the thermal conduction effect between the heat-generating component and the heat dissipation member is enhanced through thermally conductive connection of the first thermally conductive layer between the heat-generating component and the heat dissipation member, thereby improving the heat dissipation performance and heat dissipation efficiency of the electrical box, and ensuring and improving the operational performance and service life of the heat-generating component.

In some embodiments, a side of the heat dissipation member facing the heat-generating component is provided with a groove.

By adopting the aforementioned solution, on the basis of ensuring electrically insulative and thermally conductive connection between the heat-generating component and the heat dissipation member, the side of the heat dissipation member facing the heat-generating component is provided with the groove, so that through the groove, structures such as the first thermally conductive pad and the first thermally conductive layer located between the heat dissipation member and the heat-generating component are accommodated, and even part of the heat-generating component is accommodated. Based on this, on the one hand, the overall space occupied by the structures between the heat dissipation member and the heat-generating component can be reduced, thereby facilitating miniaturization and weight reduction of the electrical box. On the other hand, by accommodating the first thermally conductive pad, the first thermally conductive layer, or the heat-generating component in the groove, the area of abutment and the mating tightness between the first thermally conductive pad, the first thermally conductive layer, or the heat-generating component and the heat dissipation member is correspondingly increased, thereby enhancing the thermal conduction effect between the first thermally conductive pad, the first thermally conductive layer, or the heat-generating component and the heat dissipation member, and improving the heat dissipation performance and heat dissipation efficiency of the electrical box.

In some embodiments, at least part of the heat-generating component is embedded in the groove.

By adopting the aforementioned solution, on the basis of ensuring electrically insulative and thermally conductive connection between the heat-generating component and the heat dissipation member, at least part of the heat-generating component is embedded in the groove, so that at least part of the portion of the heat-generating component that is used for thermally conductive connection with the heat dissipation member is positionally engaged in the groove. Based on this, on the one hand, the overall space occupied by the structures between the heat dissipation member and the heat-generating component can be reduced to a relatively large extent, thereby facilitating miniaturization and weight reduction of the electrical box. On the other hand, the heat-generating component can directly form a tighter and more conforming fit with the heat dissipation member, and form larger and tighter area of abutment, thereby improving the mating tightness and thermal conduction effect between the heat-generating component and the heat dissipation member, and enhancing the heat dissipation performance and heat dissipation efficiency of the electrical box.

In some embodiments, the thermally conductive structure includes a second thermally conductive pad, the second thermally conductive pad being disposed between the heat dissipation member and the thermal management component.

By adopting the aforementioned solution, through thermally conductive connection of the second thermally conductive pad between the heat dissipation member and the thermal management component, reliable heat exchange between the heat dissipation member and the thermal management component is facilitated, and particularly thermal conduction of heat from the heat dissipation member to the thermal management component through the second thermally conductive pad is facilitated, thereby ensuring and improving the heat dissipation performance and heat dissipation efficiency of the electrical box.

In some embodiments, the second thermally conductive pad is an elastic member.

By adopting the aforementioned solution, by configuring the second thermally conductive pad as an elastic member, the second thermally conductive pad has elastic performance, enabling it to adaptively undergo elastic deformation to conformally abut between the heat dissipation member and the thermal management component. Based on this, close conformity between the second thermally conductive pad and the heat dissipation member can be ensured and sufficient area of abutment can be formed, and close conformity between the second thermally conductive pad and the thermal management component can be ensured and sufficient area of abutment can be formed, thereby ensuring that the second thermally conductive pad can be reliably and effectively thermally conductively connected between the heat dissipation member and the thermal management component, ensuring and improving the thermal conduction effect of the second thermally conductive pad, and ensuring and improving the heat dissipation performance and heat dissipation efficiency of the electrical box.

In some embodiments, the second thermally conductive pad is an insulating member.

By adopting the aforementioned solution, by configuring the second thermally conductive pad as an insulating member, the second thermally conductive pad disposed between the heat dissipation member and the thermal management component possesses insulating properties, enabling insulative isolation between the heat dissipation member and the thermal management component. Based on this, short circuits between the heat dissipation member and the thermal management component can be avoided, thereby reducing the risk of high-voltage short-circuit arcing in the electrical box.

In some embodiments, a side of the heat dissipation member facing the thermal management component is provided with a second thermally conductive layer.

By adopting the aforementioned solution, by providing the second thermally conductive layer on the side of the heat dissipation member facing the thermal management component, the thermal conduction effect between the heat dissipation member and the thermal management component can be enhanced through thermally conductive connection of the second thermally conductive layer between the heat dissipation member and the thermal management component, thereby improving the heat dissipation performance and heat dissipation efficiency of the electrical box.

In some embodiments, the thermal management component is a liquid cooling plate.

By adopting the aforementioned solution, by configuring the thermal management component as a liquid cooling plate, the liquid cooling plate can reliably and effectively exchange heat with the thermally conductive structure and the electrical box through fluid, and particularly, the area of contact and the thermal conduction effect between the thermal management component and the thermally conductive structure can be ensured, thereby meeting the heat dissipation requirements of the electrical box.

In some embodiments, the heat-generating component is a bar piece, the bar piece being connected to the thermally conductive structure in an electrically insulative and thermally conductive manner.

By adopting the aforementioned solution, by configuring the heat-generating component as a bar piece, the bar piece that generates significant heat during use can be directly thermally conductively connected to the thermally conductive structure. Based on this, substantial heat generated by the bar piece can be reliably and effectively dissipated to the exterior of the case through the thermally conductive structure, thereby effectively ensuring and improving the heat dissipation performance and heat dissipation efficiency of the electrical box, effectively reducing the risk of overheating in the electrical box, and ensuring and extending the service life of the heat-generating component, the electrical box, and the battery. On this basis, by electrically insulatively arranging the bar piece and the thermally conductive structure, short circuits between the bar piece and the thermally conductive structure can be avoided, thereby reducing the risk of high-voltage short-circuit arcing in the electrical box and improving the safety performance of the electrical box and the battery.

In a second aspect, an electrical apparatus is provided, the electrical apparatus including the battery according to the embodiments of the present application.

By adopting the aforementioned solution, the electrical apparatus can ensure and improve the operational performance, service life, and safety performance of the electrical apparatus through the application of the battery according to the embodiments of the present application.

### DESCRIPTION OF THE DRAWINGS

In order to clearly illustrate the technical solutions in embodiments of the present application, the accompanying drawings that need to be used in the description of the embodiments or the prior art will be briefly introduced below, and it will be obvious that the accompanying drawings in the following description are only some of the embodiments of the present application, and that other accompanying drawings can be obtained based on these drawings for a person of ordinary skill in the art, without any creative labor.
FIG. 1 is a schematic structural diagram of a vehicle according to some embodiments of the present application;
FIG. 2 is an exploded schematic diagram of a battery according to some embodiments of the present application;
FIG. 3 is a partial schematic structural diagram of a battery according to some embodiments of the present application;
FIG. 4 is a schematic structural diagram of an electrical box and a thermal management component according to some embodiments of the present application;
FIG. 5 is an exploded schematic diagram of an electrical box according to some embodiments of the present application;
FIG. 6 is a front view of an electrical box and a thermal management component according to some embodiments of the present application;
FIG. 7 is a cross-sectional view taken along line A-A according to FIG. 6;
FIG. 8 is a cross-sectional view of an electrical box and a thermal management component according to some other embodiments of the present application, where a heat dissipation member is provided with a first thermally conductive layer and a second thermally conductive layer;
FIG. 9 is a cross-sectional view of an electrical box and a thermal management component according to some other embodiments of the present application, where a heat dissipation member is provided with a groove, and part of a heat-generating component is embedded in the groove; and
FIG. 10 is an exploded schematic diagram of a thermal management component according to some embodiments of the present application.

Here, the reference numerals in the drawings are as follows:
1 - battery, 2 - controller, 3 - motor; 10 - battery unit; 20 - box body, 21 - first portion, 22 - second portion; 30 - electrical box, 31 - case, 311 - heat dissipation hole, 3111 - recess, 312 - base, 313 - top cover, 32 - thermally conductive structure, 321 - heat dissipation member, 3211 - first thermally conductive layer, 3212 - groove, 3213 - second thermally conductive layer, 322 - first thermally conductive pad, 323 - second thermally conductive pad; 33 - heat-generating component; 40 - thermal management component, 41 - first metal plate, 411 - flow channel, 42 - second metal plate.

### DETAILED DESCRIPTION

In order to make the technical problems, technical solutions, and beneficial effects to be solved by the present application clear, the following is a detailed explanation of the present application in conjunction with the accompanying drawings and embodiments. It should be understood that the specific embodiments described herein are merely used to explain the present application but are not intended to limit the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features. In the description of the present application, "plurality" means two or more, unless otherwise expressly and specifically defined.

In the present application, unless otherwise expressly specified and limited, the terms "mount," "connected," "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the present application can be understood according to specific situations.

In a battery, an electrical box serves as a control unit for distributing energy of the battery and is configured to perform high-voltage distribution for the battery. In some scenarios, the electrical box includes a case and a heat-generating component disposed within the case, where part of the heat-generating component extends through the case and is exposed outside the case. During operation of the electrical box, the heat-generating component generates heat, and the heat generated by the heat-generating component can be dissipated to the exterior of the case through the portion of the heat-generating component that is exposed outside the case, thereby ensuring the heat dissipation performance and heat dissipation efficiency of the electrical box, and ensuring the operational performance and service life of the heat-generating component.

However, the inventors have found that, based on the aforementioned heat dissipation design, the sealing performance of the electrical box is relatively poor. When water leakage occurs in the thermal management component within the battery, or when battery sealing failure causes water infiltration from the exterior of the battery to the interior of the battery, the water infiltrated into the battery may infiltrate into the interior of the electrical box through weak sealing areas of the electrical box. This poses a risk of high-voltage short-circuit arcing in the electrical box due to water infiltration from the exterior to the interior, which affects the safety performance of the electrical box and the battery.

Thus, some embodiments of the present application provide a battery. In the battery, the electrical box can accommodate the heat-generating component through the case and connect the heat-generating component inside the case to the thermal management component outside the case through the thermally conductive structure, so as to facilitate heat exchange and thermal conduction between the heat-generating component and the thermal management component via the thermally conductive structure, and particularly to facilitate thermal conduction of heat generated by the heat-generating component to the thermal management component through the thermally conductive structure, thereby ensuring and improving the heat dissipation performance and heat dissipation efficiency of the electrical box, reducing the risk of overheating in the electrical box, ensuring the operational performance of the heat-generating component, and ensuring and extending the service life of the heat-generating component, the electrical box, and the battery. Furthermore, since the thermally conductive structure is sealingly connected to the case, the connection gap between the thermally conductive structure and the case can be effectively sealed, and thus liquid infiltration from the exterior of the case into the interior of the case through the gap between the thermally conductive structure and the case can be reliably prevented, thereby effectively ensuring and improving the sealing performance between the case and the electrical box, effectively reducing the risk of high-voltage short-circuit arcing in the electrical box due to water infiltration from the exterior to the interior, and effectively ensuring the safety performance of the electrical box and the battery.

The battery disclosed in the embodiments of the present application may be a modular structure including one or more battery cells to provide higher voltage and capacity, such as a battery module or a battery pack. The battery cell may be a lithium-ion secondary battery, a lithium-ion primary battery, a lithium-sulfur battery, a sodium-lithium-ion battery, a sodium-ion battery, a magnesium-ion battery, or the like; the battery cell may be cylindrical, flat, cuboid, or other shapes; the battery cell may adopt different encapsulation methods to form a cylindrical battery cell, a prismatic battery cell, a pouch battery cell, or the like.

The battery disclosed in the embodiments of the present application can be used in an electrical apparatus that uses a battery as the power source or used in various energy storage systems that use batteries as energy storage elements. The electrical apparatus can be, but not limited to, a vehicle, a mobile phone, a portable device, a laptop, a ship, a spacecraft, an electric toy, a power tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

To illustrate the technical solutions according to the present application, the following detailed description is provided in conjunction with specific drawings and embodiments, and taking "the electrical apparatus being a vehicle" as an example.

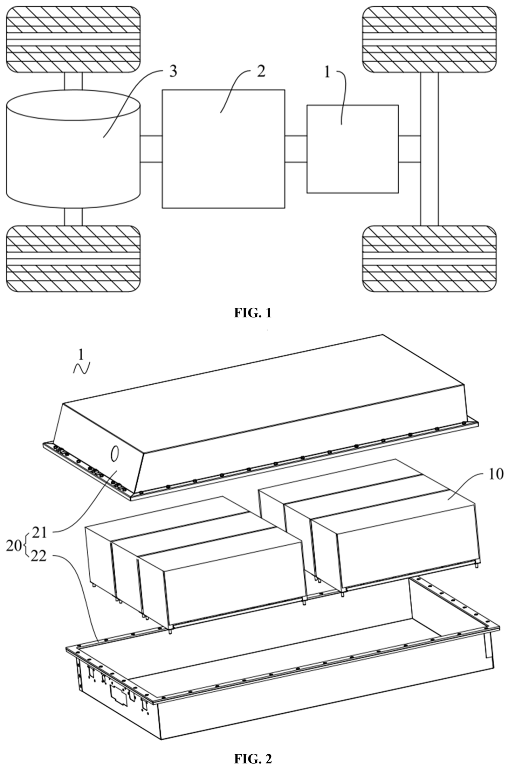

Please refer to FIG. 1. FIG. 1 is a schematic structural diagram of a vehicle according to some embodiments of the present application. The vehicle may be a fuel vehicle, a gas vehicle, or a new energy vehicle, and the new energy vehicle may be a battery electric vehicle, a hybrid electric vehicle, an extended range vehicle, and the like. The interior of the vehicle is provided with a battery 1, and the battery 1 may be provided at the bottom or head or tail of the vehicle. The battery 1 is configured to supply power to the vehicle. For example, the battery 1 can serve as an operational power source for the vehicle. The vehicle may further include a controller 2 and a motor 3. The controller 2 is used to control the battery 1 to power the motor 3, for example, for meeting operating power demands when the vehicle is starting, navigating, and traveling.

In some embodiments of the present application, the battery 1 can not only serve as an operating power source of the vehicle, but also serve as a driving power source of the vehicle, thus replacing or partially replacing fuel or natural gas to provide driving power for the vehicle.

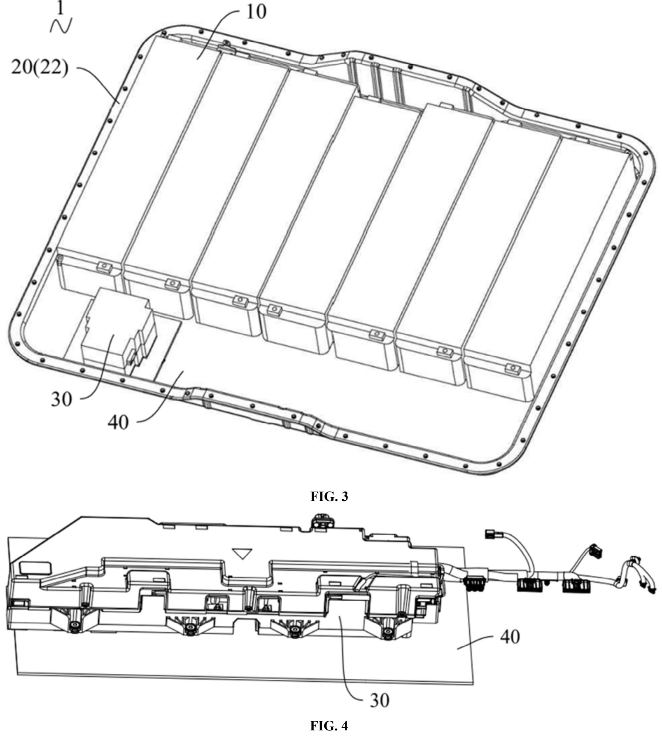

Please refer to FIGS. 2 and 3. FIG. 2 is an exploded schematic diagram of a battery 1 according to some embodiments of the present application, and FIG. 3 is a partial schematic structural diagram of the battery 1 according to some embodiments of the present application. The battery 1 includes a battery unit 10 and a box body 20, with the battery unit 10 accommodated within the box body 20. The box body 20 is configured to provide a first accommodating space for the battery unit 10, and the box body 20 may adopt a variety of structures. In some embodiments, the box body 20 may include a first portion 21 and a second portion 22, the first portion 21 and the second portion 22 covering each other, and the first portion 21 and the second portion 22 collectively defining the first accommodating space for accommodating the battery unit 10. The second portion 22 may be of a hollow structure with an opening at one end, and the first portion 21 may be of a plate-like structure, where the first portion 21 covers the opening side of the second portion 22 so that the first portion 21 and the second portion 22 collectively define the first accommodating space; and the first portion 21 and the second portion 22 may each be of a hollow structure with an opening at one end, where the opening side of the first portion 21 is capped on the opening side of the second portion 22. Of course, the box body 20 formed by the first portion 21 and the second portion 22 may be of various shapes, such as a cylinder, a cuboid, or the like.

In the battery 1, there may be a plurality of battery cells 10, and the plurality of battery cells 10 may be connected in series, in parallel, or in parallel-series, and the parallel-series connection means that the plurality of battery cells 10 are connected in both series and parallel.

Specifically, the battery unit 10 may be a battery cell. The plurality of battery cells may be directly connected in series, in parallel, or in a hybrid connection, and the integrated unit composed of the plurality of battery cells is then accommodated within the box body 20. The battery cell may be a lithium-ion secondary battery, a lithium-sulfur battery, a sodium-lithium-ion battery, a sodium-ion battery, a magnesium-ion battery, or the like. The battery cell may be cylindrical, flat, cuboid, or other shapes. The battery cell may adopt different encapsulation methods to form a cylindrical battery cell, a prismatic battery cell, a pouch battery cell, or the like.

Alternatively, the battery unit 10 may be a battery module or a battery pack. A plurality of battery cells may first be connected in series, in parallel, or in a hybrid connection to form a modular structure, i.e., a battery module or battery pack. Then, a plurality of battery modules or battery packs may be connected in series, in parallel, or in a hybrid connection to form an integrated unit, which is accommodated within the box body 20.

In some embodiments, the battery 1 may further include an electrical box 30. The electrical box 30 is accommodated within the first accommodating space of the box body 20, and the electrical box 30 is connected to the battery unit 10, etc. The electrical box 30 can serve as a control unit for distributing energy of the battery 1 and performs high-voltage distribution for the battery 1. In some embodiments, the electrical box 30 may include a case, high-voltage components, and electrical connectors. The high-voltage components are disposed within the case. The high-voltage components may include one or more of relays, current sensors, fuses, insurance devices, pre-charge resistors, or the like. The relays may include a main positive relay, a main negative relay, or the like. The electrical connectors are configured to electrically connect to the high-voltage components.

In some embodiments, the battery 1 may further comprise a thermal management component 40. The thermal management component 40 is accommodated within the first accommodating space of the box body 20 and configured to exchange heat with components such as the battery unit 10 and the electrical box 30 to regulate the temperature of the battery 1. The thermal management component 40 may be a liquid cooling plate. In some embodiments, a single thermal management component 40 may be provided and positioned on the same side as components such as the battery unit 10 and the electrical box 30 to facilitate heat exchange with the components such as the battery unit 10 and the electrical box 30. Certainly, in some embodiments, a plurality of thermal management components 40 may be provided to facilitate flexible design of the positions and states of the thermal management components 40, thereby enabling the plurality of thermal management components 40 to separately exchange heat with components such as the battery unit 10 and the electrical box 30. The thermal management component 40 may be an air cooling system. The airflow generated by the air cooling system can pass through components such as the battery unit 10 and the electrical box 30 to facilitate heat exchange with the components such as the battery unit 10 and the electrical box 30. Certainly, the thermal management component 40 may also adopt other structural forms.

Certainly, the battery 1 may also include other structures. For example, the battery 1 may also include a busbar component (not shown in the figures), configured to achieve electrical connections between the plurality of battery units 10.

Certainly, in some embodiments, the battery 1 may not include the box body 20, but a plurality of battery cells may be electrically connected and formed into a whole through necessary fixing structures and are then assembled into an electrical apparatus.

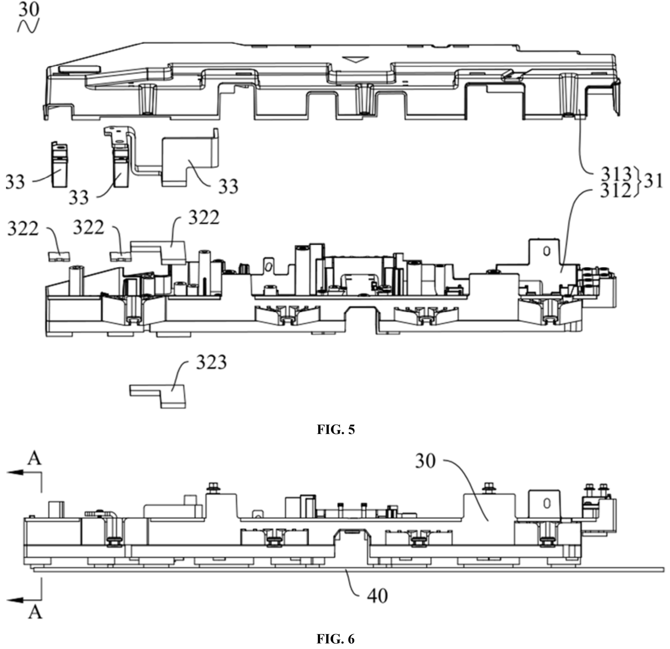

Please refer to FIGS. 3 and 4. Some embodiments of the present application provide a battery 1. The battery 1 includes a thermal management component 40 and an electrical box 30. The thermal management component 40 is configured to regulate the temperature of the battery 1. Please refer to FIGS. 5, 6, and 7. The electrical box 30 includes a case 31 and a thermally conductive structure 32. The case 31 is configured to accommodate a heat-generating component 33. The thermally conductive structure 32 is sealingly connected to the case 31, the thermally conductive structure 32 connecting the heat-generating component 33 and the thermal management component 40.

It should be noted that the thermal management component 40 is configured to perform heat exchange with components such as the electrical box 30 to regulate the temperature of the battery 1. One or more thermal management component 40 may be provided. The thermal management component 40 may adopt a variety of structural forms. The thermal management component 40 may include, but not limited to, a liquid cooling plate.

It should also be noted that the electrical box 30 can serve as a control unit for distributing the energy of the battery 1 and perform high-voltage distribution for the battery 1. The electrical box 30 includes components such as a case 31, a thermally conductive structure 32, and a heat-generating component 33.

The case 31 is configured to provide a second accommodating space for components such as the heat-generating component 33 of the electrical box 30, and the case 31 may adopt a variety of structural forms. In some embodiments, the case 31 may include a base 312 and a top cover 313, where the base 312 and the top cover 313 cover each other, and the base 312 and the top cover 313 collectively define a second accommodating space for accommodating components such as the heat-generating component 33 of the electrical box 30. The base 312 may be a hollow structure with one open end, and the top cover 313 may be a plate-like structure, where the top cover 313 covers the open side of the base 312, allowing the top cover 313 and the base 312 to collectively define the second accommodating space; and the base 312 and the top cover 313 may also be hollow structures each with one open side, and the open side of the top cover 313 may cover the open side of the base 312. Certainly, the case 31 formed by the top cover 313 and the base 312 may be of a variety of shapes, such as a cylinder, a rectangular body, and the like. Certainly, in other embodiments, the case 31 may be formed through assembling three or more portions.

The heat-generating component 33 is disposed within the second accommodating space of the case 31. The heat-generating component 33 may refer to any component within the electrical box 30 that is disposed inside the case 31 and generates heat, such as an electrical device, or an electrical connection component for establishing electrical connections, including but not limited to bar pieces, busbars, conductive sheets, and the like. The electrical device may be, but is not limited to, an insurance device, a relay, a pre-charge resistor, or the like.

The thermally conductive structure 32 includes thermally conductive material, has thermal conductivity performance, and functions to conduct heat, i.e., functioning to exert heat exchange and thermal conduction effects. The thermally conductive structure 32 may be a single-layer structure or a multi-layer structure. The thermally conductive structure 32 may be of a variety of shapes, such as a rectangular solid, a cylinder, or the like.

The thermally conductive structure 32 is sealingly connected to the case 31 to seal the connection gap between the thermally conductive structure 32 and the case 31, and thus liquid infiltration from the exterior of the case 31 into the interior of the case 31 through the gap between the thermally conductive structure 32 and the case 31 can be reliably prevented, thereby ensuring and improving the sealing performance between the case 31 and the electrical box 30. The thermally conductive structure 32 may be sealingly connected to the case 31 through its own structural design or by using components such as sealing rings or sealant.

The thermally conductive structure 32 is connected to the heat-generating component 33 to facilitate rapid and reliable heat exchange between the thermally conductive structure 32 and the heat-generating component 33, and particularly facilitate thermal conduction and dissipation of heat generated by the heat-generating component 33 to the exterior of the case 31 through the thermally conductive structure 32, thereby ensuring and improving the heat dissipation performance and heat dissipation efficiency of the electrical box 30, ensuring the operational performance of the heat-generating component 33, and ensuring and extending the service life of the heat-generating component 33, the electrical box 30, and the battery 1.

The thermally conductive structure 32 is connected to the thermal management component 40 to facilitate rapid and reliable heat exchange between the thermally conductive structure 32 and the thermal management component 40, and particularly facilitate thermal conduction of heat generated by the heat-generating component 33 to the thermal management component 40 through the thermally conductive structure 32, thereby ensuring and improving the heat dissipation performance and heat dissipation efficiency of the electrical box 30, and reducing the risk of overheating in the electrical box 30.

In summary, in the battery 1 according to the embodiments of the present application, the electrical box 30 can accommodate the heat-generating component 33 with the case 31 and connect the heat-generating component 33 inside the case 31 to the thermal management component 40 outside the case 31 through the thermally conductive structure 32, so as to facilitate heat exchange and thermal conduction between the heat-generating component 33 and the thermal management component 40 via the thermally conductive structure 32, and particularly to facilitate thermal conduction of heat generated by the heat-generating component 33 to the thermal management component 40 through the thermally conductive structure 32, thereby ensuring and improving the heat dissipation performance and heat dissipation efficiency of the electrical box 30, reducing the risk of overheating in the electrical box 30, ensuring the operational performance of the heat-generating component 33, and ensuring and extending the service life of the heat-generating component 33, the electrical box 30, and the battery 1. Furthermore, since the thermally conductive structure 32 is sealingly connected to the case 31, the connection gap between the thermally conductive structure 32 and the case 31 can be effectively sealed, and thus liquid infiltration from the exterior of the case 31 into the interior of the case 31 through the gap between the thermally conductive structure 32 and the case 31 can be reliably prevented, thereby effectively ensuring and improving the sealing performance between the case 31 and the electrical box 30, effectively reducing the risk of high-voltage short-circuit arcing in the electrical box 30 due to water infiltration from the exterior to the interior, and effectively ensuring the safety performance of the electrical box 30 and the battery 1.

Please refer to FIGS. 3, 4, and 7. In some embodiments of the present application, the thermally conductive structure 32 is connected to the heat-generating component 33 in an electrically insulative and thermally conductive manner.

It should be noted that the heat-generating component 33 is thermally conductively connected to the thermally conductive structure 32 to facilitate rapid and reliable heat exchange between the thermally conductive structure 32 and the heat-generating component 33, and particularly facilitate thermal conduction and dissipation of heat generated by the heat-generating component 33 to the thermal management component 40 through the thermally conductive structure 32, thereby ensuring and improving the heat dissipation performance and heat dissipation efficiency of the electrical box 30, ensuring the operational performance of the heat-generating component 33, and ensuring and extending the service life of the heat-generating component 33.

The heat-generating component 33 and the thermally conductive structure 32 are electrically insulatively arranged to avoid short circuits between the heat-generating component 33 and the thermally conductive structure 32, thereby reducing the risk of high-voltage short-circuit arcing in the electrical box 30. Specifically, at least a portion of the heat-generating component 33 that is used for thermally conductive connection with the thermally conductive structure 32 may be an insulating member, or a surface of the heat-generating component 33 that is used for thermally conductive connection with the thermally conductive structure 32 may be provided with an insulating layer, or at least a portion of the thermally conductive structure 32 that is used for thermally conductive connection with the heat-generating component 33 may be an insulating member, or a surface of the thermally conductive structure 32 that is used for thermally conductive connection with the heat-generating component 33 may be provided with an insulating layer, or an object thermally conductively connected between the heat-generating component 33 and the thermally conductive structure 32 may be an insulating member, or the like, all of which can achieve electrical insulation between the heat-generating component 33 and the thermally conductive structure 32.

By adopting the aforementioned solution, the heat-generating component 33 is connected to the thermally conductive structure 32 in an electrically insulative and thermally conductive manner, which, on the one hand, can facilitate rapid and reliable heat exchange between the thermally conductive structure 32 and the heat-generating component 33, and particularly facilitate thermal conduction and dissipation of heat generated by the heat-generating component 33 to the thermal management component 40 through the thermally conductive structure 32, thereby ensuring and improving the heat dissipation performance and heat dissipation efficiency of the electrical box 30, and ensuring and improving the operational performance and service life of the heat-generating component 33 connected to the thermally conductive structure 32. On the other hand, short circuits between the heat-generating component 33 and the thermally conductive structure 32 can be avoided, thereby reducing the risk of high-voltage short-circuit arcing in the electrical box 30 and improving the safety performance of the electrical box 30 and the battery 1.

Please refer to FIGS. 3, 4, and 7. In some embodiments of the present application, the thermally conductive structure 32 is connected to the thermal management component 40 in an electrically insulative and thermally conductive manner.

It should be noted that the thermally conductive structure 32 is thermally conductively connected to the thermal management component 40 to facilitate rapid and reliable heat exchange between the thermally conductive structure 32 and the thermal management component 40, and particularly facilitate thermal conduction and dissipation of heat generated by the heat-generating component 33 to the thermal management component 40 through the thermally conductive structure 32, thereby ensuring and improving the heat dissipation performance and heat dissipation efficiency of the electrical box 30, reducing the risk of overheating in the electrical box 30, and ensuring and extending the service life of the electrical box 30 and the battery 1.

The thermally conductive structure 32 and the thermal management component 40 are electrically insulated arranged to avoid short circuits between the thermally conductive structure 32 and the thermal management component 40, thereby reducing the risk of high-voltage short-circuit arcing in the electrical box 30. Specifically, at least a portion of the thermal management component 40 that is used for thermally conductive connection with the thermally conductive structure 32 may be an insulating member, or a surface of the thermal management component 40 that is used for thermally conductive connection with the thermally conductive structure 32 may be provided with an insulating layer, or at least a portion of the thermally conductive structure 32 that is used for thermally conductive connection with the thermal management component 40 may be an insulating member, or a surface of the thermally conductive structure 32 that is used for thermally conductive connection with the thermal management component 40 may be provided with an insulating layer, or an object thermally conductively connected between the thermal management component 40 and the thermally conductive structure 32 may be an insulating member, or the like, all of which can achieve electrical insulation between the thermally conductive structure 32 and the thermal management component 40.

By adopting the aforementioned solution, the thermally conductive structure 32 is connected to the thermal management component 40 in an electrically insulative and thermally conductive manner, which, on the one hand, can facilitate rapid and reliable heat exchange between the thermally conductive structure 32 and the thermal management component 40, and particularly facilitate thermal conduction and dissipation of heat generated by the heat-generating component 33 to the thermal management component 40 through the thermally conductive structure 32, thereby ensuring and improving the heat dissipation performance and heat dissipation efficiency of the electrical box 30, reducing the risk of overheating in the electrical box 30, and ensuring and extending the service life of the electrical box 30 and the battery 1. On the other hand, short circuits between the thermally conductive structure 32 and the thermal management component 40 can be avoided, thereby reducing the risk of high-voltage short-circuit arcing in the electrical box 30 and improving the safety performance of the electrical box 30 and the battery 1.

Please refer to FIGS. 3, 4, and 7. In some embodiments of the present application, a heat dissipation hole 311 penetrates through a side wall of the case 31. The thermally conductive structure 32 includes a heat dissipation member 321, the heat dissipation member 321 being embedded in the heat dissipation hole 311, where a peripheral wall of the heat dissipation member 321 is sealingly connected to a hole wall of the heat dissipation hole 311.

It should be noted that the case 31 has a plurality of side walls, which together define a second accommodating space for accommodating components such as the heat-generating component 33 of the electrical box 30. Any side wall may be provided with the heat dissipation hole 311 as needed, and the heat dissipation hole 311 penetrates through the side wall along the thickness direction of the side wall. The number of heat dissipation holes 311 is at least one. The heat dissipation hole 311 may be, but is not limited to, a circular hole, a rectangular hole, or a hole of other shapes.

It should also be noted that the thermally conductive structure 32 includes the heat dissipation member 321. The heat dissipation member 321 includes at least one of a heat dissipation material, a thermally conductive material, or a phase change material. In other words, the heat dissipation member 321 is made of at least one of a heat dissipation material, a thermally conductive material, or a phase change material, such that the heat dissipation member 321 possesses heat dissipation performance and thermally conductive performance, enabling it to exert heat exchange and thermal conduction effects. The heat dissipation member 321 may be a metal member or a non-metal member, such as an aluminum member, a ceramic member, or the like. The heat dissipation member 321 may have various shapes, such as circular plate-shaped, polygonal plate-shaped, circular block-shaped, polygonal block-shaped, or the like.

The heat dissipation member 321 is correspondingly arranged relative to the heat dissipation hole 311. The heat dissipation member 321 is embedded in the heat dissipation hole 311. In a cross section with the heat dissipation hole 311, the heat dissipation member 321 substantially blocks the heat dissipation hole 311. Here, the cross section of the heat dissipation hole 311 refers to a section of the heat dissipation hole 311 that intersects (optionally perpendicular to) its axial direction. The axial direction of the heat dissipation hole 311 refers to the direction of the heat dissipation hole 311 along its central axis. The shape of the heat dissipation member 321 may be the same as or different from the shape of the heat dissipation hole 311. In the axial direction of the heat dissipation hole 311, the thickness of the heat dissipation member 321 may be greater than, less than, or equal to the length of the heat dissipation hole 311.

The peripheral wall of the heat dissipation member 321 is sealingly connected to the hole wall of the heat dissipation hole 311 to seal the gap between the peripheral wall of the heat dissipation member 321 and the hole wall of the heat dissipation hole 311, and thus liquid infiltration from the exterior of the case 31 into the interior of the case 31 through the gap between the peripheral wall of the heat dissipation member 321 and the hole wall of the heat dissipation hole 311 can be reliably prevented, thereby ensuring and improving the sealing performance of the case 31 and the electrical box 30. The peripheral wall of the heat dissipation member 321 and the hole wall of the heat dissipation hole 311 may be clearance-fitted, transition-fitted, or interference-fitted. The sealed connection between the peripheral wall of the heat dissipation member 321 and the hole wall of the heat dissipation hole 311 can be achieved through the structural designs of the members themselves or using components such as sealing rings or sealant.

By adopting the aforementioned solution, the electrical box 30 can embed the heat dissipation member 321 in the heat dissipation hole 311 on the side wall of the case 31, so as to facilitate heat exchange between the interior and exterior of the case 31 through the heat dissipation member 321, and particularly facilitate thermal conduction of heat from the heat-generating component 33 to the thermal management component 40 through the heat dissipation member 321, thereby ensuring the heat dissipation performance and heat dissipation efficiency of the electrical box 30, reducing the risk of overheating in the electrical box 30, and ensuring and extending the service life of the heat-generating component 33, the electrical box 30, and the battery 1. On this basis, the electrical box 30 can also reliably sealingly connect the thermally conductive structure 32 to the case 31 by sealingly connect the peripheral wall of the heat dissipation member 321 to the hole wall of the heat dissipation hole 311, so that the connection gap between the thermally conductive structure 32 and the case 31 can be effectively sealed, and particularly, the gap between the peripheral wall of the heat dissipation member 321 and the hole wall of the heat dissipation hole 311 can be effectively sealed, and thus liquid infiltration from the exterior of the case 31 into the interior of the case 31 through the gap between the peripheral wall of the heat dissipation member 321 and the hole wall of the heat dissipation hole 311 can be reliably prevented, thereby ensuring and improving the sealing performance between the case 31 and the electrical box 30, reducing the risk of high-voltage short-circuit arcing in the electrical box 30 due to water infiltration from the exterior to the interior, and improving the safety performance of the electrical box 30 and the battery 1.

Please refer to FIGS. 4, 5, and 7. In some embodiments of the present application, the heat dissipation member 321 and the case 31 form an integrated structure. The heat dissipation member 321 and the case 31 may be formed into an integrated structure through, but not limited to, integral molding processes such as integral injection molding, and 3D printing.

By adopting the aforementioned solution, the heat dissipation member 321 and the case 31 can form an integrated structure through an integrated molding process. Based on this, on the one hand, the gap between the peripheral wall of the heat dissipation member 321 and the hole wall of the heat dissipation hole 311 can be conveniently, rapidly, and reliably sealed by integrally connecting the peripheral wall of the heat dissipation member 321 and the hole wall of the heat dissipation hole 311, thereby ensuring and improving the sealing performance between the case 31 and the electrical box 30, and reducing the risk of high-voltage short-circuit arcing in the electrical box 30 due to water infiltration from the exterior to the interior. On the other hand, the structural strength between the heat dissipation member 321 and the case 31 can be enhanced, the assembly process between the heat dissipation member 321 and the case 31 can be reduced, and the production efficiency of the electrical box 30 can be improved.

Of course, in other possible implementations, the heat dissipation member 321 and the case 31 may be separately formed and then connected as discrete components.

Please refer to FIGS. 4, 5 and 7. In some embodiments of the present application, the heat dissipation member 321 and the case 31 are integrally injection-molded. That is, the heat dissipation member 321 and the case 31 form an integrated structure through integral injection molding.

By adopting the aforementioned solution, the heat dissipation member 321 and the case 31 can be integrally injection-molded. Based on this, on the one hand, the connection strength between the heat dissipation member 321 and the case 31 can be enhanced, the overall structural strength of the heat dissipation member 321 and the case 31 can be enhanced, the assembly process between the heat dissipation member 321 and the case 31 can be reduced, and the production efficiency of the electrical box 30 can be improved. On the other hand, the connection between the peripheral wall of the heat dissipation member 321 and the hole wall of the heat dissipation hole 311 can be made tight, conforming, and reliable, so that the gap between the peripheral wall of the heat dissipation member 321 and the hole wall of the heat dissipation hole 311 can be conveniently, rapidly, and reliably sealed, thereby improving the sealing performance between the case 31 and the electrical box 30, and reducing the risk of high-voltage short-circuit arcing in the electrical box 30 due to water infiltration from the exterior to the interior.

Please refer to FIGS. 4, 5, and 7. In some embodiments of the present application, the hole wall of the heat dissipation hole 311 is provided with a recess 3111, and part of the heat dissipation member 321 is embedded in the recess 3111.

It should be noted that the hole wall of the heat dissipation hole 311 is provided with the recess 3111, the extending direction of the recess 3111 corresponding to the circumferential direction of the heat dissipation member 321. The recess 3111 may be linear, open annular, or closed annular. For example, assuming that the heat dissipation hole 311 is a polygonal hole, one side hole wall of the heat dissipation hole 311 is provided with the recess 3111, the recess 3111 extending corresponding to the circumferential direction of the heat dissipation member 321, which may extend linearly. For another example, assuming that the heat dissipation hole 311 is a polygonal hole, the recess 3111 extends corresponding to the circumferential direction of the heat dissipation member 321 on multiple hole walls of the heat dissipation hole 311. If the start end and the terminal end of the recess 3111 are connected, a closed annular shape may be formed. If the start end and the terminal end of the recess 3111 are disconnected and spaced, an open annular shape may be formed.

The portion of the heat dissipation member 321 that corresponds to the recess 3111 is embedded in the recess 3111. For example, when the recess 3111 is closed annular, the circumferential sides of the heat dissipation member 321 are correspondingly embedded in the closed annular recess 3111.

By adopting the aforementioned solution, on the basis that the heat dissipation member 321 and the case 31 form an integrated structure, by embedding part of the heat dissipation member 321 in the recess 3111 on the hole wall of the heat dissipation hole 311, the area of connection between the heat dissipation member 321 and the heat dissipation hole 311 can be increased, the overall structural strength of the heat dissipation member 321 and the case 31 can be enhanced, and the strength, the tightness, and the conformity of the connection between the heat dissipation member 321 and the case 31 can be enhanced, thereby improving the sealing reliability between the heat dissipation member 321 and the heat dissipation hole 311, improving the sealing performance between the case 31 and the electrical box 30, and reducing the risk of high-voltage short-circuit arcing in the electrical box 30 due to water infiltration from the exterior to the interior.

Of course, in other possible implementations, the peripheral wall of the heat dissipation member 321 may be adaptively attached to and integrally connected with the hole wall of the heat dissipation hole 311.

Please refer to FIGS. 3, 4, and 7. In some embodiments of the present application, the heat dissipation member 321 is an aluminum plate, the aluminum plate being connected to the heat-generating component 33 in an electrically insulative and thermally conductive manner, and the aluminum plate being connected to the thermal management component 40 in an electrically insulative and thermally conductive manner.

It should be noted that the heat dissipation member 321 is an aluminum plate. With such a configuration, the thermal conduction effects of the heat dissipation member 321 and the thermally conductive structure 32 can be effectively ensured and improved based on the excellent thermal conductivity of the aluminum plate, thereby effectively ensuring and improving the heat dissipation performance and heat dissipation efficiency of the electrical box 30, effectively reducing the risk of overheating in the electrical box 30, and ensuring and extending the service life of the heat-generating component 33, the electrical box 30, and the battery 1.

The aluminum plate and the heat-generating component 33 are electrically insulated arranged to avoid short circuits between the aluminum plate and the heat-generating component 33, thereby reducing the risk of high-voltage short-circuit arcing in the electrical box 30. Specifically, at least a portion of the heat-generating component 33 that is used for thermally conductive connection with the aluminum plate may be an insulating member, or a surface of the heat-generating component 33 that is used for thermally conductive connection with the aluminum plate may be provided with an insulating layer, or a surface of the aluminum plate that is used for thermally conductive connection with the heat-generating component 33 may be provided with an insulating layer, or an object that is in thermally conductive connection between the heat-generating component 33 and the aluminum plate may be an insulating member, or the like, all of which can achieve electrical insulation between the aluminum plate and the heat-generating component 33.

The aluminum plate and the thermal management component 40 are electrically insulated arranged to avoid short circuits between the aluminum plate and the thermal management component 40, thereby reducing the risk of high-voltage short-circuit arcing in the electrical box 30. Specifically, at least a portion of the thermal management component 40 that is used for thermally conductive connection with the aluminum plate may be an insulating member, or a surface of the thermal management component 40 that is used for thermally conductive connection with the aluminum plate may be provided with an insulating layer, or a surface of the aluminum plate that is used for thermally conductive connection with the thermal management component 40 may be provided with an insulating layer, or an object that is thermally conductively connected between the thermal management component 40 and the aluminum plate may be an insulating member, or the like, all of which can achieve electrical insulation between the aluminum plate and the thermal management component 40.

By adopting the aforementioned solution, by configuring the heat dissipation member 321 as an aluminum plate, the thermal conduction effects of the heat dissipation member 321 and the thermally conductive structure 32 can be effectively ensured and improved based on the excellent thermal conductivity of the aluminum plate, thereby effectively ensuring and improving the heat dissipation performance and heat dissipation efficiency of the electrical box 30, effectively reducing the risk of overheating in the electrical box 30, and ensuring and extending the service life of the heat-generating component 33, the electrical box 30, and the battery 1. On this basis, by connecting the aluminum plate to the heat-generating component 33 in an electrically insulative and thermally conductive manner, short circuits between the aluminum plate and the heat-generating component 33 can be avoided, and by connecting the aluminum plate to the thermal management component 40 in an electrically insulative and thermally conductive manner, short circuits between the aluminum plate and the thermal management component 40 can be avoided, thereby reducing the risk of high-voltage short-circuit arcing in the electrical box 30, and improving the safety performance of the electrical box 30 and the battery 1.

Please refer to FIGS. 4, 5, and 7. In some embodiments of the present application, the thermally conductive structure 32 includes a first thermally conductive pad 322, the first thermally conductive pad 322 being disposed between the heat-generating component 33 and the heat dissipation member 321.

It should be noted that the first thermally conductive pad 322 includes a thermally conductive material, has thermally conductive performance, and can exert thermal conduction effects. The first thermally conductive pad 322 is disposed between the heat-generating component 33 and the heat dissipation member 321 and is used for thermally conductive connection between the heat-generating component 33 and the heat dissipation member 321. The first thermally conductive pad 322 may be in various forms, such as sheet-like, plate-like, or block-like. The first thermally conductive pad 322 may have various shapes, such as circular, polygonal, or irregular. The material of the first thermally conductive pad 322 may be selected from materials with high thermal conductivity, such as thermally conductive materials with a thermal conductivity of 0.6 or higher. The first thermally conductive pad 322 may be a thermally conductive silicone pad. Of course, in some other embodiments, the first thermally conductive pad 322 may also use other similar thermally conductive materials, which will not be repeated here.

By adopting the aforementioned solution, through thermally conductive connection of the first thermally conductive pad 322 between the heat-generating component 33 and the heat dissipation member 321, reliable heat exchange between the heat dissipation member 321 and the heat-generating component 33 is facilitated, and particularly thermal conduction of heat generated by the heat-generating component 33 to the heat dissipation member 321 through the first thermally conductive pad 322 and then dissipation of the heat to the exterior of the case 31 through the heat dissipation member 321 is facilitated, thereby ensuring the heat dissipation performance and heat dissipation efficiency of the electrical box 30, and ensuring the operational performance and service life of the heat-generating component 33.

Of course, in other possible implementations, the first thermally conductive pad 322 may not be provided, and instead other structures (e.g., the first thermally conductive layer 3211 described below) may be used to thermally conductively connect the heat-generating component 33 and the heat dissipation member 321, or the heat-generating component 33 may be directly thermally conductively connected to the heat dissipation member 321 without using any structures.

Please refer to FIGS. 4, 5, and 7. In some embodiments of the present application, the first thermally conductive pad 322 is an elastic member.

It should be noted that the first thermally conductive pad 322 is an elastic member, which allows the first thermally conductive pad 322 to have elastic performance in addition to thermally conductive performance, enabling the first thermally conductive pad 322 to undergo elastic deformation under force.

By adopting the aforementioned solution, by configuring the first thermally conductive pad 322 as an elastic member, the first thermally conductive pad 322 disposed between the heat-generating component 33 and the heat dissipation member 321 has elastic performance, enabling it to adaptively undergo elastic deformation to conformally abut between the heat-generating component 33 and the heat dissipation member 321. Based on this, close conformity between the first thermally conductive pad 322 and the heat-generating component 33 can be ensured and sufficient area of abutment can be formed, and close conformity between the first thermally conductive pad 322 and the heat dissipation member 321 can be ensured and sufficient area of abutment can be formed, thereby ensuring that the first thermally conductive pad 322 can be reliably and effectively thermally conductively connected between the heat-generating component 33 and the heat dissipation member 321, ensuring and improving the thermal conduction effect of the first thermally conductive pad 322, and ensuring and improving the heat dissipation performance and heat dissipation efficiency of the electrical box 30.

Of course, in other possible implementations, the first thermally conductive pad 322 may be a rigid member.

Please refer to FIGS. 4, 5, and 7. In some embodiments of the present application, the first thermally conductive pad 322 is an insulating member.

It should be noted that the first thermally conductive pad 322 is an insulating member, which allows the first thermally conductive pad 322 to have insulating properties in addition to thermally conductive performance, enabling the first thermally conductive pad 322 to provide electrical insulation between the heat-generating component 33 and the heat dissipation member 321.

By adopting the aforementioned solution, by configuring the first thermally conductive pad 322 as an insulating member, the first thermally conductive pad 322 disposed between the heat-generating component 33 and the heat dissipation member 321 possesses insulating properties, enabling insulative isolation between the heat-generating component 33 and the heat dissipation member 321. Based on this, short circuits between the heat-generating component 33 and the heat dissipation member 321 can be avoided, thereby reducing the risk of high-voltage short-circuit arcing in the electrical box 30.

Of course, in other possible implementations, the first thermally conductive pad 322 may be a non-insulating member (i.e., a conductive member), while other means may be adopted to achieve electrical insulation between the heat-generating component 33 and the heat dissipation member 321.

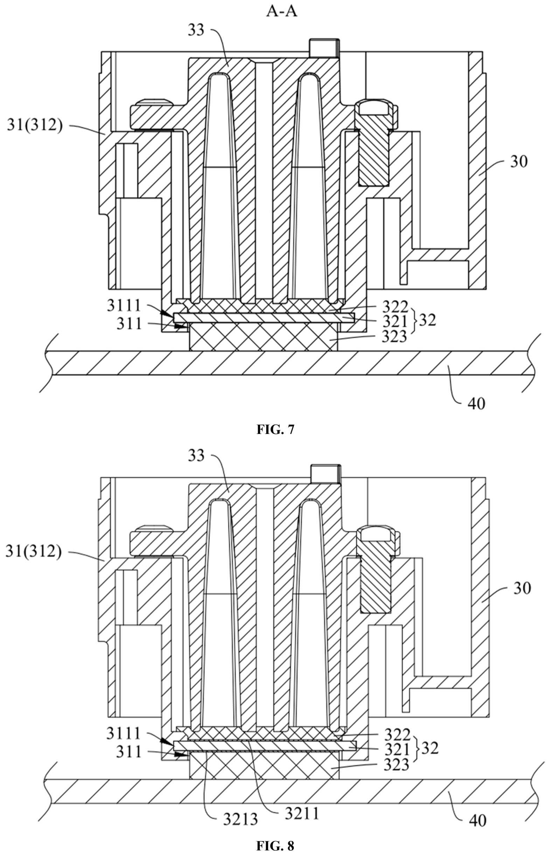

Please refer to FIG. 8. In some embodiments of the present application, the side of the heat dissipation member 321 facing the heat-generating component 33 is provided with a first thermally conductive layer 3211.

It should be noted that the first thermally conductive layer 3211 includes a thermally conductive material, has thermally conductive performance, and can exert thermal conduction effects. The first thermally conductive layer 3211 may be formed on the side of the heat dissipation member 321 facing the heat-generating component 33 by means of, but not limited to, coating or injection molding, and the first thermally conductive layer 3211 is used for thermally conductive connection between the heat-generating component 33 and the heat dissipation member 321. In some embodiments, as shown in the embodiment of FIG. 8, when the first thermally conductive pad 322 is provided, the first thermally conductive layer 3211 may be located between the first thermally conductive pad 322 and the heat dissipation member 321. By adopting the aforementioned solution, by providing the first thermally conductive layer 3211 on the side of the heat dissipation member 321 facing the heat-generating component 33, the thermal conduction effect between the heat-generating component 33 and the heat dissipation member 321 is enhanced through thermally conductive connection of the first thermally conductive layer 3211 between the heat-generating component 33 and the heat dissipation member 321, thereby improving the heat dissipation performance and heat dissipation efficiency of the electrical box 30, and ensuring and improving the operational performance and service life of the heat-generating component 33.

In some embodiments, the first thermally conductive layer 3211 may be an insulating layer, so as to provide electrical insulation in addition to thermal conduction, enabling the first thermally conductive layer 3211 to provide electrical insulation between the heat-generating component 33 and the heat dissipation member 321. Of course, in other possible implementations, the first thermally conductive layer 3211 may be a non-insulating member (i.e., a conductive member), while other means may be adopted to achieve electrical insulation between the heat-generating component 33 and the heat dissipation member 321.

In some examples, the first thermally conductive layer 3211 may be a thermally conductive structural adhesive. The thermally conductive structural adhesive has high strength and good thermal conductivity, can withstand large loads, and bonding connection using the thermally conductive structural adhesive can make stress distribution on the bonding surface uniform, resulting in higher connection stability and reliability.

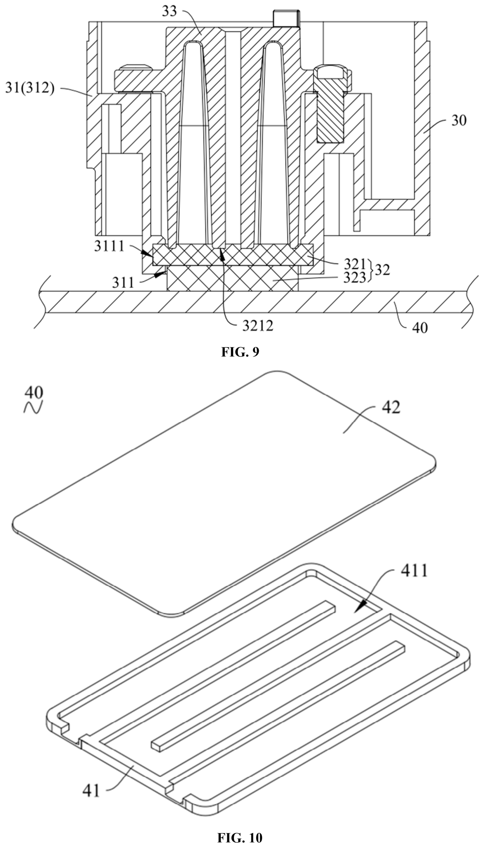

Please refer to FIGS. 8 and 9. In some embodiments of the present application, the side of the heat dissipation member 321 facing the heat-generating component 33 is provided with a groove 3212.

It should be noted that, while ensuring electrically insulative and thermally conductive connection between the heat-generating component 33 and the heat dissipation member 321, the side of the heat dissipation member 321 facing the heat-generating component 33 is provided with the groove 3212 to accommodate structures disposed between the heat dissipation member 321 and the heat-generating component 33, for example, the first thermally conductive pad 322, the first thermally conductive layer 3211, etc., or even to accommodate part of the heat-generating component 33. The shape and size of the groove 3212 may be flexibly designed according to the object it accommodates. For example, the side of the heat dissipation member 321 facing the heat-generating component 33 is provided with the first thermally conductive layer 3211, where the first thermally conductive layer 3211 may be disposed in the groove 3212. For another example, the first thermally conductive pad 322 is provided between the heat-generating component 33 and the heat dissipation member 321, where the first thermally conductive pad 322 may be disposed in the groove 3212. For yet another example, at least the portion of the heat-generating component 33 that is used for thermally conductive connection with the heat dissipation member 321 may be disposed in the groove 3212.

By adopting the aforementioned solution, on the basis of ensuring electrically insulative and thermally conductive connection between the heat-generating component 33 and the heat dissipation member 321, the side of the heat dissipation member 321 facing the heat-generating component 33 is provided with the groove 3212, so that through the groove 3212, structures such as the first thermally conductive pad 322 and the first thermally conductive layer 3211 located between the heat dissipation member 321 and the heat-generating component 33 are accommodated, or even part of the heat-generating component 33 is accommodated. Based on this, on the one hand, the overall space occupied by the structures between the heat dissipation member 321 and the heat-generating component 33 can be reduced, thereby facilitating miniaturization and weight reduction of the electrical box 30. On the other hand, by accommodating the first thermally conductive pad 322, the first thermally conductive layer 3211, or the heat-generating component 33 in the groove 3212, the area of abutment and the mating tightness between the first thermally conductive pad 322, the first thermally conductive layer 3211, or the heat-generating component 33 and the heat dissipation member 321 is correspondingly increased, thereby enhancing the thermal conduction effect between the first thermally conductive pad 322, the first thermally conductive layer 3211, or the heat-generating component 33 and the heat dissipation member 321, and improving the heat dissipation performance and heat dissipation efficiency of the electrical box 30.

Please refer to FIGS. 8 and 9. In some embodiments of the present application, at least part of the heat-generating component 33 is embedded in the groove 3212.

It should be noted that, on the basis of ensuring electrically insulative and thermally conductive connection between the heat-generating component 33 and the heat dissipation member 321, at least part of the heat-generating component 33 is embedded in the groove 3212, and particularly, at least part of the portion of the heat-generating component 33 that is used for thermally conductive connection with the heat dissipation member 321 is embedded in the groove 3212. On this basis, if between the heat-generating component 33 and the heat dissipation member 321, the first thermally conductive pad 322 is further provided, the first thermally conductive pad 322 is disposed between the groove bottom of the groove 3212 and the heat-generating component 33; if the side of the heat dissipation member 321 facing the heat-generating component 33 is further provided with the first thermally conductive layer 3211, the first thermally conductive layer 3211 is disposed on the groove bottom of the groove 3212.

By adopting the aforementioned solution, on the basis of ensuring electrically insulative and thermally conductive connection between the heat-generating component 33 and the heat dissipation member 321, at least part of the heat-generating component 33 is embedded in the groove 3212, so that at least part of the portion of the heat-generating component 33 that is used for thermally conductive connection with the heat dissipation member 321 is positionally engaged in the groove 3212. Based on this, on the one hand, the overall space occupied by the structures between the heat dissipation member 321 and the heat-generating component 33 can be reduced to a relatively large extent, thereby facilitating miniaturization and weight reduction of the electrical box 30. On the other hand, the heat-generating component 33 can directly form a tighter and more conforming fit with the heat dissipation member 321, and form larger and tighter area of abutment, thereby improving the mating tightness and thermal conduction effect between the heat-generating component 33 and the heat dissipation member 321, and enhancing the heat dissipation performance and heat dissipation efficiency of the electrical box 30.

Please refer to FIGS. 4, 5, and 7. In some embodiments of the present application, the thermally conductive structure 32 includes a second thermally conductive pad 323, the second thermally conductive pad 323 being disposed between the heat dissipation member 321 and the thermal management component 40.

It should be noted that the second thermally conductive pad 323 includes a thermally conductive material, has thermally conductive performance, and can exert thermal conduction effects. The second thermally conductive pad 323 is disposed between the heat dissipation member 321 and the thermal management component 40. The second thermally conductive pad 323 is used for thermally conductive connection between the heat dissipation member 321 and the thermal management component 40. The second thermally conductive pad 323 may be in various forms, such as sheet-like, plate-like, or block-like. The second thermally conductive pad 323 may have various shapes, such as circular, polygonal, or irregular. The material of the second thermally conductive pad 323 may be selected from materials with high thermal conductivity, such as thermally conductive materials with a thermal conductivity of 0.6 or higher. The second thermally conductive pad 323 may be a thermally conductive silicone pad. Of course, in some other embodiments, the second thermally conductive pad 323 may also use other similar thermally conductive materials, which will not be repeated here.

By adopting the aforementioned solution, through thermally conductive connection of the second thermally conductive pad 323 between the heat dissipation member 321 and the thermal management component 40, reliable heat exchange between the heat dissipation member 321 and the thermal management component 40 is facilitated, and particularly thermal conduction of heat from the heat dissipation member 321 to the thermal management component 40 through the second thermally conductive pad 323 is facilitated, thereby ensuring and improving the heat dissipation performance and heat dissipation efficiency of the electrical box 30.

Of course, in other possible implementations, the second thermally conductive pad 323 may not be provided, and instead other structures (e.g., the second thermally conductive layer 3213 described below) may be used to thermally conductively connect the heat dissipation member 321 and the thermal management component 40, or the heat dissipation member 321 may be directly thermally conductively connected to the thermal management component 40 without using any structures.

Please refer to FIGS. 4, 5, and 7. In some embodiments of the present application, the second thermally conductive pad 323 is an elastic member.

It should be noted that the second thermally conductive pad 323 is an elastic member, which allows the second thermally conductive pad 323 to have elastic performance in addition to thermally conductive performance, enabling the second thermally conductive pad 323 to undergo elastic deformation under force.

By adopting the aforementioned solution, by configuring the second thermally conductive pad 323 as an elastic member, the second thermally conductive pad 323 has elastic performance, enabling it to adaptively undergo elastic deformation to conformally abut between the heat dissipation member 321 and the thermal management component 40. Based on this, close conformity between the second thermally conductive pad 323 and the heat dissipation member 321 can be ensured and sufficient area of abutment can be formed, and close conformity between the second thermally conductive pad 323 and the thermal management component 40 can be ensured and sufficient area of abutment can be formed, thereby ensuring that the second thermally conductive pad 323 can be reliably and effectively thermally conductively connected between the heat dissipation member 321 and the thermal management component 40, ensuring and improving the thermal conduction effect of the second thermally conductive pad 323, and ensuring and improving the heat dissipation performance and heat dissipation efficiency of the electrical box 30.

Of course, in other possible implementations, the second thermally conductive pad 323 may be a rigid member.

Please refer to FIGS. 4, 5, and 7. In some embodiments of the present application, the second thermally conductive pad 323 is an insulating member.

It should be noted that the second thermally conductive pad 323 is an insulating member, which allows the second thermally conductive pad 323 to have insulating properties in addition to thermally conductive performance, enabling the second thermally conductive pad 323 to provide electrical insulation between the heat dissipation member 321 and the thermal management component 40.

By adopting the aforementioned solution, by configuring the second thermally conductive pad 323 as an insulating member, the second thermally conductive pad 323 disposed between the heat dissipation member 321 and the thermal management component 40 possesses insulating properties, enabling insulative isolation between the heat dissipation member 321 and the thermal management component 40. Based on this, short circuits between the heat dissipation member 321 and the thermal management component 40 can be avoided, thereby reducing the risk of high-voltage short-circuit arcing in the electrical box 30.

Of course, in other possible implementations, the second thermally conductive pad 323 may be a non-insulating member (i.e., a conductive member), while other means may be adopted to achieve electrical insulation between the heat dissipation member 321 and the thermal management component 40.

Please refer to FIG. 8. In some embodiments of the present application, the side of the heat dissipation member 321 facing the thermal management component 40 is provided with a second thermally conductive layer 3213.

It should be noted that the second thermally conductive layer 3213 includes a thermally conductive material, has thermally conductive performance, and can exert thermal conduction effects. The second thermally conductive layer 3213 may be formed on the side of the heat dissipation member 321 facing the thermal management component 40 by means of, but not limited to, coating or injection molding, and the second thermally conductive layer 3213 is used for thermally conductive connection between the heat dissipation member 321 and the thermal management component 40. In some embodiments, as shown in the embodiment of FIG. 8, when the second thermally conductive pad 323 is provided, the second thermally conductive layer 3213 may be located between the second thermally conductive pad 323 and the heat dissipation member 321.

In some examples, the second thermally conductive layer 3213 may be a thermally conductive structural adhesive. The thermally conductive structural adhesive has high strength and good thermal conductivity, can withstand large loads, and bonding connection using the thermally conductive structural adhesive can make stress distribution on the bonding surface uniform, resulting in higher connection stability and reliability.

By adopting the aforementioned solution, by providing the second thermally conductive layer 3213 on the side of the heat dissipation member 321 facing the thermal management component 40, the thermal conduction effect between the heat dissipation member 321 and the thermal management component 40 can be enhanced through thermally conductive connection of the second thermally conductive layer 3213 between the heat dissipation member 321 and the thermal management component 40, thereby improving the heat dissipation performance and heat dissipation efficiency of the electrical box 30.

In some embodiments, the second thermally conductive layer 3213 may be an insulating layer, so as to provide electrical insulation in addition to thermal conduction, enabling the second thermally conductive layer 3213 to provide electrical insulation between the heat dissipation member 321 and the thermal management component 40. Of course, in other possible implementations, the second thermally conductive layer 3213 may be a non-insulating member (i.e., a conductive member), while other means may be adopted to achieve electrical insulation between the heat dissipation member 321 and the thermal management component 40.

Please refer to FIGS. 3, 4, and 7. In some embodiments of the present application, the thermal management component 40 is a liquid cooling plate.

It should be noted that the thermal management component 40 is a liquid cooling plate, and the thermal management component 40 may adopt various structures. As shown in FIG. 10, in some embodiments, the thermal management component 40 includes a first metal plate 41 having a flow channel 411 and a flat plate-like second metal plate 42, the second metal plate 42 covering the flow channel 411 for accommodating fluid on the first metal plate 41. The fluid may be used to regulate the temperature, the fluid may be liquid or gas. Optionally, the fluid may circulate to achieve better temperature regulation effects. Optionally, the fluid may be water, a mixture of water and ethylene glycol, air, or the like.

By adopting the aforementioned solution, by configuring the thermal management component 40 as a liquid cooling plate, the liquid cooling plate can reliably and effectively exchange heat with the thermally conductive structure 32 and the electrical box 30 through fluid, and particularly, the area of contact and the thermal conduction effect between the thermal management component 40 and the thermally conductive structure 32 can be ensured, thereby meeting the heat dissipation requirements of the electrical box 30.

Of course, in other possible implementations, the thermal management component 40 may also adopt other structural forms.

Please refer to FIGS. 3, 4, and 7. In some embodiments of the present application, the heat-generating component 33 is a bar piece, and the bar piece is connected to the thermally conductive structure 32 in an electrically insulative and thermally conductive manner.

It should be noted that the heat-generating component 33 is a bar piece, and the bar piece is thermally conductively connected to the thermally conductive structure 32. With such a configuration, the bar piece that generates significant heat during use can be directly thermally conductively connected to the thermally conductive structure 32. Based on this, substantial heat generated by the bar piece can be reliably and effectively dissipated to the exterior of the case 31 through the thermally conductive structure 32, thereby effectively ensuring and improving the heat dissipation performance and heat dissipation efficiency of the electrical box 30, effectively reducing the risk of overheating in the electrical box 30, and ensuring and extending the service life of the heat-generating component 33, the electrical box 30, and the battery 1.

The bar piece and the thermally conductive structure 32 are electrically insulatively arranged to avoid short circuits between the bar piece and the thermally conductive structure 32, thereby reducing the risk of high-voltage short-circuit arcing in the electrical box 30. Specifically, a surface of the bar piece that is used for thermally conductive connection with the thermally conductive structure 32 may be provided with an insulating layer, at least a portion of the thermally conductive structure 32 that is used for thermally conductive connection with the bar piece may be an insulating member, a surface of the thermally conductive structure 32 that is used for thermally conductive connection with the bar piece may be provided with an insulating layer, or an object thermally conductively connected between the bar piece and the thermally conductive structure 32 may be an insulating member, or the like, all of which can achieve electrical insulation between the bar piece and the thermally conductive structure 32.

By adopting the aforementioned solution, by configuring the heat-generating component 33 as a bar piece, the bar piece that generates significant heat during use can be directly thermally conductively connected to the thermally conductive structure 32. Based on this, substantial heat generated by the bar piece can be reliably and effectively dissipated to the exterior of the case 31 through the thermally conductive structure 32, thereby effectively ensuring and improving the heat dissipation performance and heat dissipation efficiency of the electrical box 30, effectively reducing the risk of overheating in the electrical box 30, and ensuring and extending the service life of the heat-generating component 33, the electrical box 30, and the battery 1. On this basis, by electrically insulatively arranging the bar piece and the thermally conductive structure 32, short circuits between the bar piece and the thermally conductive structure 32 can be avoided, thereby reducing the risk of high-voltage short-circuit arcing in the electrical box 30 and improving the safety performance of the electrical box 30 and the battery 1.

Please refer to FIG. 1. Some embodiments of the present application provide an electrical apparatus, including the battery 1 according to the embodiments of the present application.

By adopting the aforementioned solution, the electrical apparatus can ensure and improve the operational performance, service life, and safety performance of the electrical apparatus through the application of the battery 1 according to the embodiments of the present application.

The foregoing descriptions are merely preferred embodiments of the present application, but are not intended to limit the present application. Any modification, equivalent replacement, or improvement made within the spirit and principle of the present application shall fall within the protection scope of the present application.

## Claims

1. A battery, comprising:
a thermal management component configured to regulate a temperature of the battery; and
an electrical box comprising:
a case configured to accommodate a heat-generating component; and
a thermally conductive structure sealingly connected to the case, the thermally conductive structure connecting the heat-generating component and the thermal management component.

2. The battery of claim 1, wherein the thermally conductive structure is connected to the heat-generating component in an electrically insulative and thermally conductive manner; and/or the thermally conductive structure is connected to the thermal management component in an electrically insulative and thermally conductive manner.

3. The battery of claim 1, wherein a heat dissipation hole penetrates through a side wall of the case; and the thermally conductive structure comprises a heat dissipation member, the heat dissipation member being embedded in the heat dissipation hole, wherein a peripheral wall of the heat dissipation member is sealingly connected to a hole wall of the heat dissipation hole.

4. The battery of claim 3, wherein the heat dissipation member and the case form an integrated structure.

5. The battery of claim 4, wherein the heat dissipation member and the case are integrally injection-molded.

6. The battery of any one of claims 3 to 5, wherein the hole wall of the heat dissipation hole is provided with a recess, and part of the heat dissipation member is embedded in the recess.

7. The battery of any one of claims 3 to 6, wherein the heat dissipation member is an aluminum plate, the aluminum plate being connected to the heat-generating component in an electrically insulative and thermally conductive manner, and the aluminum plate being connected to the thermal management component in an electrically insulative and thermally conductive manner.

8. The battery of any one of claims 3 to 7, wherein the thermally conductive structure comprises a first thermally conductive pad, the first thermally conductive pad being disposed between the heat-generating component and the heat dissipation member.

9. The battery of claim 8, wherein the first thermally conductive pad is an elastic member; and/or the first thermally conductive pad is an insulating member.

10. The battery of any one of claims 3 to 9, wherein a side of the heat dissipation member facing the heat-generating component is provided with a first thermally conductive layer.

11. The battery of any one of claims 3 to 10, wherein a side of the heat dissipation member facing the heat-generating component is provided with a groove.

12. The battery of claim 11, wherein at least part of the heat-generating component is embedded in the groove.

13. The battery of any one of claims 3 to 12, wherein the thermally conductive structure comprises a second thermally conductive pad, the second thermally conductive pad being disposed between the heat dissipation member and the thermal management component.

14. The battery of claim 13, wherein the second thermally conductive pad is an elastic member; and/or the second thermally conductive pad is an insulating member.

15. The battery of any one of claims 3 to 14, wherein a side of the heat dissipation member facing the thermal management component is provided with a second thermally conductive layer.

16. The battery of any one of claims 1 to 15, wherein the thermal management component is a liquid cooling plate.

17. The battery of any one of claims 1 to 16, wherein the heat-generating component is a bar piece, the bar piece being connected to the thermally conductive structure in an electrically insulative and thermally conductive manner.

18. An electrical apparatus, wherein the electrical apparatus comprises the battery of any one of claims 1 to 17.
